# EUROPEAN PATENT SPECIFICATION

(11) **EP 3 529 213 B1**
(45) Date of publication and mention of the grant of the patent: **12.08.2020**
(21) Application number: 17784728.2
(22) Date of filing: 25.09.2017
(51) Int. Cl.: C03B 9/36, C03B 9/41, C03B 9/193

(54) **FORMING GLASS CONTAINERS RESPONSIVE TO SUSPENDED PARISON ELONGATION**
FORMUNG VON GLASBEHÄLTERN, DIE AUF DIE DEHNUNG EINES HÄNGENDEN VORFORMLINGS REAGIERT
FORMATION DE RÉCIPIENTS EN VERRE EN RÉPONSE À UN ALLONGEMENT DE PARAISON SUSPENDUE

(30) Priority: 18.10.2016 US 201615296826
(43) Date of publication of application: 28.08.2019
(73) Proprietor: Owens-Brockway Glass Container Inc., Perrysburg, OH 43551 (US)
(72) Inventor: GRAFF, Stephen, M., Maumee, OH 43537 (US); KIRKMAN, Thomas, R., Perrysburg, OH 43551 (US); PEENO, Joshua, Maumee, OH 43537 (US); LEWIS, David, L., Sylvania, OH 43560 (US); STEINECKER, Adam, W., Holland, OH 43528 (US)
(74) Representative: Blumbach · Zinngrebe Patentanwälte PartG mbB
(86) International application number: PCT/US2017/053248
(87) International publication number: WO 2018/075199

(56) References cited:
- WO-A1-00/56673
- WO-A1-2013/062722
- US-A- 4 137 061

## Description

The present disclosure is directed to glass manufacturing and, more particularly, to forming of glass containers by blow molding glass parisons.

### Background and Summary of the Disclosure

Methods for molding glass containers typically include press-and-blow or blow-and-blow processes. For example, a blow-and-blow process for molding glass containers usually includes the following steps: feeding molten glass into a blank mold having a plunger; closing the mold, retracting the plunger, and blowing the molten glass against internal walls of the blank mold to form a parison; opening the blank mold and inverting the parison while transferring the parison to an open blow mold; and closing the blow mold and blowing the parison against internal walls of the blow mold to form a finished container. A U.S. patent that illustrates a process of this type includes 4,137,061. After a parison is inverted and transferred to a blow mold, the parison may re-heat and elongate before a fixed time at which gas pressure is applied to the parison to form the parison into a container. When the parison is too long or too short at the time air pressure is applied, undesirable variations in the wall thickness of the container can occur.

WO 00/56673 A1 describes a temperature control system including thermal sensors for sensing temperatures of a plunger and a blank mold.

WO 2013/062722 A1 describes a method and apparatus for determining an effective minimum bore diameter of a container mouth as being a value other than the overall lowest minimum bore diameter.

A general object of the present disclosure, in accordance with one aspect of the disclosure, is to provide a method of forming a glass container in response to the sensing of a position of a glass parison in a mold.

The present disclosure embodies a number of aspects that can be implemented separately from or in combination with each other.

The present invention relates to a method and an apparatus for forming glass containers using a sensor, as defined in claims 1-15.

A method of forming a glass container in accordance with one aspect of the disclosure includes the steps of: allowing a suspended parison to elongate in a mold along a central longitudinal axis; sensing at least one position of a closed end of the parison within the mold before the closed end of the parison contacts a transversely extending surface in the mold; and adjusting at least one process parameter responsive to the sensing step.

In accordance with another aspect of the disclosure, there is provided a glass container forming system that includes a mold to form a container from a parison having an open end, a closed end, and a central longitudinal axis extending therebetween. The mold includes a bottom plate, and a mold body having a lower end closeable around a portion of the bottom plate. The system also includes a sensor operative parallel within less than five angular degrees to the longitudinal axis to sense at least one position of the closed end of the parison as the parison is suspended within the mold before the closed end of the parison contacts a transversely extending surface in the mold. An internal and/or external surface of the parison closed end may be sensed from above the closed end, below the closed end, or otherwise.

In accordance with a further aspect of the disclosure, there is provided an apparatus for sensing elongation of a parison in a blow mold of a glassware forming machine. The apparatus includes a bottom plate, a mold body having a lower end closeable around a portion of the bottom plate, an opening in the bottom plate of the blow mold, an optical window in said opening, and a sensor operatively coupled to said window and through said window to said parison in the blow mold, for sensing position of the parison with respect to the bottom plate. The optical window may allow measurement of the parison from a location below the parison.

### Brief Description of the Drawings

The disclosure, together with additional objects, features, advantages and aspects thereof, will be best understood from the following description, the appended claims and the accompanying drawings, in which:
FIGS. 1-3 are schematic views of portions of a press-and-blow process including a gob feeder, gob handler, and blank mold equipment according to an illustrative embodiment of the present disclosure;
FIG. 4 is an elevational view of a parison according to an illustrative embodiment of the present disclosure that may be produced by the equipment illustrated in FIGS. 1-3;
FIG. 4A is a top view of the parison of FIG. 4;
FIG. 5 is a schematic view of the press-and-blow process including a blank side with blank mold equipment, a transfer invert stage with parison transfer equipment, and a blow side with blow mold equipment including a parison elongation sensor that may be used to sense elongation of a parison through a portion of the parison transfer equipment;
FIG. 6 is a schematic view of a portion of blow mold equipment according to an illustrative embodiment of the present disclosure, and illustrating that the parison elongation sensor may be used to sense elongation of the parison after the parison transfer equipment has been withdrawn from the blow mold equipment;
FIG. 7 is a schematic view of the portion of the blow mold equipment of FIG. 6, illustrating that the parison elongation sensor may be used to sense elongation of the parison in the blow mold before the parison is blown into contact with walls of the blow mold and after the parison has elongated in the blow mold;
FIG. 8 is a schematic view of the blow mold wherein the parison of FIG. 7 has been fully formed into a completed container;
FIG. 9 is a schematic view similar to that of FIG. 7, except that FIG. 9 illustrates a parison elongation sensor that cooperates with a reflector to sense elongation of the parison in the blow mold, according to another illustrative embodiment of the present disclosure;
FIG. 10 is a schematic view similar to that of FIG. 7, except that FIG. 10 illustrates a first parison elongation sensor carried by a blow head and a second parison elongation sensor carried at a lower end of a blow mold, according to one or more additional illustrative embodiments of the present disclosure;
FIG. 10A is an enlarged fragmentary view of a portion of FIG. 10;
FIG. 10B is a schematic sectional view of a portion of the blow mold of FIG. 10; and
FIG. 10C is an enlarged fragmentary view of a portion of FIG. 10B.

### Detailed Description

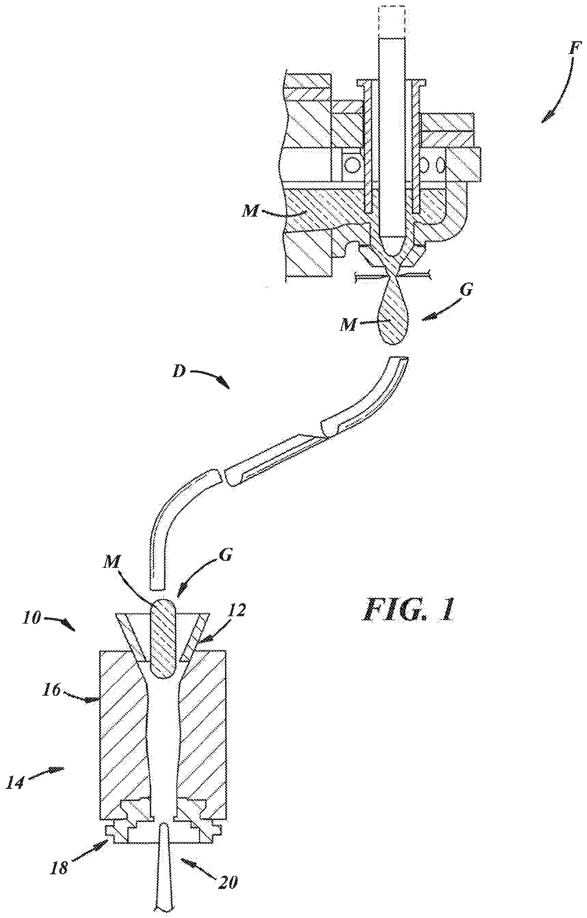

FIGS. 1-3 illustrate an example of a portion of a container forming process including a blank side having blank mold equipment 10, a glass gob feeder F that produces a glass gob G, and a gob distributor D that distributes gobs from the feeder F to the blank mold equipment 10. Those of ordinary skill in the art will recognize that the feeder F may include a spout at a downstream end of a furnace forehearth to receive molten glass M therefrom, an orifice ring at a bottom of the spout to control gob size, a heater in the spout to control gob temperature and/or viscosity, a plunger in the spout to push molten glass M out of the orifice ring, and shears below the orifice ring to cut gobs from the molten glass M. The heater may include a flame burner, electrical resistance heater, microwave heater, or any other suitable heater. The plunger and the shears may include hydraulic, pneumatic, electric, or any other suitable type of actuators. Likewise, the gob distributor D may include hydraulic, pneumatic, electric, or any other suitable type of actuators, and may include a scoop to receive the receive gobs from the feeder F, a trough to receive gobs from the scoop and convey them downstream, and a deflector to receive gobs from the trough and convey them downstream to the blank mold equipment 10.

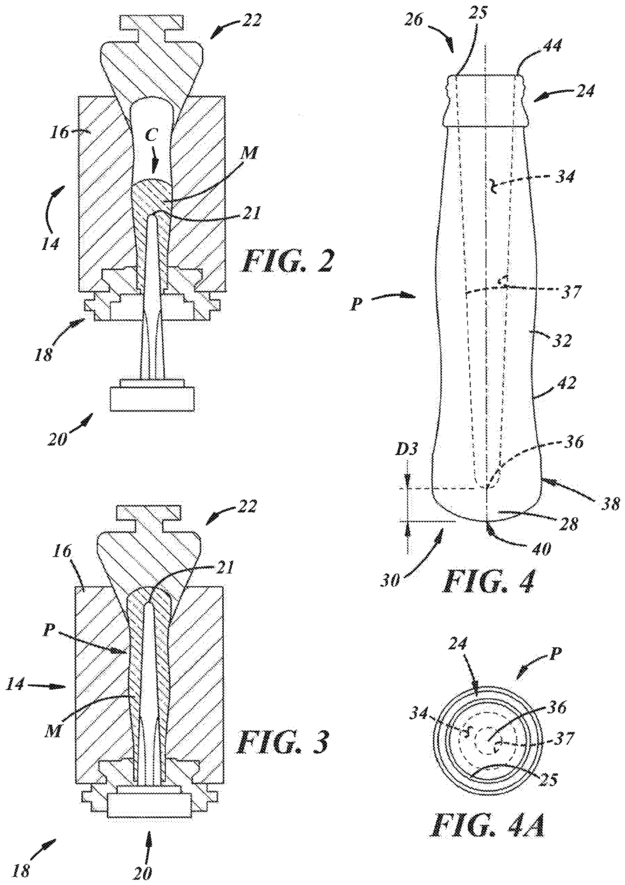

The blank mold equipment 10 may be press forming equipment, as illustrated, but, in other embodiments, may be blow forming equipment, or any other suitable equipment that forms a parison. With reference to FIG. 1, a downstream gob G of the molten glass M is illustrated being dropped through a funnel 12 into an open parison mold or blank mold 14 including a blank mold body 16, a neck ring 18, and a plunger 20. In FIG. 2, the funnel 12 (FIG. 1) has been withdrawn and a baffle 22 is shown advanced into position against the blank mold body 16. Also, in FIG. 2, the plunger 20 has been advanced into the blank mold body 16, and what is now a charge C of the molten glass M is shown settled at the bottom of the mold 14 within the neck ring 18 and against the plunger 20 and around the plunger end 21. In FIG. 3, the funnel (not shown) has been withdrawn, the baffle 22 has been advanced against the mold body 16, and the plunger 20 has been advanced to form the molten glass M against internal surfaces of the blank mold body 16 and the baffle 22 to produce a parison P from the molten glass M.

Accordingly, the process may include a step of forming the parison P in the blank mold 14, for example, by blow forming, press forming, and/or any other suitable technique(s). The parison forming step may include the measurement or control of the gob arrival time, the gob temperature, the mold surface temperature, the plunger press timing and pressure, the parison-blank mold contact time, the parison-blank cooling time, and the parison reheat time and/or temperature level.

As a result, and with reference to FIGS. 4 and/or 4A, the parison P includes a neck finish 24 at an open end 26, an inner diameter 25 of the neck finish 24, an end wall 28 at a closed end 30,and a sidewall 32 extending between the ends 26, 30. The parison P also includes an interior 34 including an interior end surface 36 and interior side surfaces 37, and an exterior 38 including an exterior end surface 40, exterior side surfaces 42, and an exterior lip surface 44. The closed end 30 of the parison P has a thickness D3.

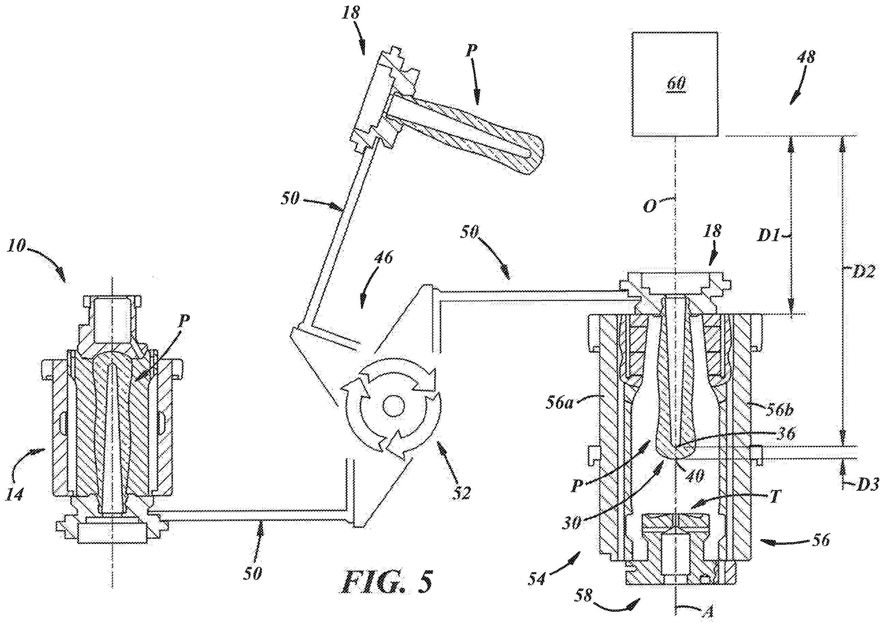

With reference to FIG. 5, parison transfer equipment 46 may be used to transfer the parison P from the blank side to a blow side of the process that includes blow mold equipment 48. The transfer equipment 46 may include an invert arm 50 that may be rotated by an actuator 52, for example, a motor of any kind, or any other suitable device that can rotate the arm 50. In any case, the transfer equipment 46 inverts the parison P as it delivers the parison P into a portion of the blow mold equipment 48. In an embodiment, the invert arm 50 may be coupled to the neck ring 18 in any suitable manner, and may include any suitable equipment that may be used to retract portions of the neck ring 18 to release the parison P. Accordingly, the process may include a step of inverting the parison P and transferring the parison P from the blank mold 14 of the blank side to the blow mold equipment 48 of the blow side of the process.

As also illustrated in FIG. 5, the blow mold equipment 48 includes a blow mold 54 having a central longitudinal axis A and a blow mold body 56 with mold halves 56a, 56b, and a bottom plate 58 disposed between lower ends of the mold halves 56a, 56b The mold halves 56a, 56b are closeable together around the parison P and the bottom plate 58. The parison P is suspended within the mold 54. While suspended, the parison P is allowed to re-heat and elongate within the mold 54. More specifically, the parison P may be suspended at its neck finish by the neck ring 18, or the neck ring 18 may be removed such that the parison P is suspended at its neck by corresponding portions of the mold 54, or in any other suitable manner. In any case, the parison P is suspended in the mold 54 such that the closed end 30 of the parison P is free and not supported, for example, by a transversely extending surface T, for instance, an upper surface of the bottom plate 58. At some time after the mold halves 56a, 56b close together around the bottom plate 58 to form a closed mold cavity, gas pressure is applied to the parison P to mold the parison P into a container (not shown).

Those of ordinary skill in the art will recognize that, although termed a "blow" mold, the blow mold 54 can operate under positive and/or negative gas pressure. For example, blow gas may be delivered into the interior of the parison P, and/or the space between the parison P and the mold 54 may be evacuated via application of vacuum or negative gas pressure, until the parison P is fully blown and/or pulled into conformity with internal surfaces of the blow mold 54. The blow gas may be delivered by a blow head after the neck ring 18 is removed by the invert arm 50.

As further illustrated in FIG. 5, a sensor 60 is provided to sense a position of a portion of the parison P, for example, the position of the closed end 30 of the parison P at any given location within the mold 54. In the embodiment of FIG. 5, the sensor 60 may be located above the blow mold 54 and out of the operating envelope of the transfer equipment 46. As illustrated the sensor 60 may sense the parison P while the neck ring 18 is located on the blow side and, more particularly, located adjacent or against the blow mold 54. More specifically, the sensor 60 may sense the parison P through the neck ring 18.

The sensor 60 may include a distance sensor, for example, a laser distance sensor, an ultrasonic distance sensor, a proximity sensor, chromatic aberration sensor, or any other type of sensor suitable to detect a distance between a sensor and a target. The laser distance sensor may include a laser triangulation sensor, a laser time-of-flight sensor, or any other suitable laser distance sensor. If the sensor 60 operates based on light or another signal medium that can be refracted, reflected, and/or redirected in another manner, those of ordinary skill in the art will recognize that a sensor body could be located along a different axis from a separate signal pickup head. In that case, fiber optics, mirrors, or other suitable devices could be used to guide the light or other signal from the signal pickup head to the sensing body. In any case, the sensor 60 may include an operational axis O along which a light beam, sound wave, or any other medium may travel.

In the embodiment illustrated in FIG. 5, the sensor 60 is operatively disposed above the blow mold 54 to sense the parison P in the blow mold 54 and, more particularly, may be used to sense the position of the closed end 30 of the parison P in the blow mold 54. The sensor 60 is operative substantially parallel to the longitudinal axis A. For example, in the embodiment of FIG. 5, the sensor 60 is located directly above the parison P with its operational axis O extending substantially along the longitudinal axis A of the parison P. In one embodiment, the operational axis O and the longitudinal axis A of the parison P may be coaxial. In any case, the operational axis O may be substantially parallel to the longitudinal axis A of the parison P, such that the sensing step may carried out substantially parallel to the longitudinal axis A of the parison P. As used herein, the phrase "substantially" includes within less than five angular degrees. However, the operational axis of the sensor 60 need not be perfectly parallel or coaxial to the longitudinal axis A of the parison P and/or need not remain substantially along the longitudinal axis A during the entire container manufacturing process. For example, some containers, like beer bottles, may enable use of a non-parallel operational axis on the order of five angular degrees from the longitudinal axis, and other containers with a larger diameter finish, like baby food jars, may enable use of a non-parallel operational axis on the order of twenty angular degrees from the longitudinal axis of the parison P.

In any case, the sensor 60 is illustrated in a fixed location, and at a distance D1 from a top surface of mold halves 56a, 56b. The distance D1 may be fixed, or could also vary with respect to time. A second distance D2 is illustrated to represent a measured distance that may be determined in any suitable manner based on output from the sensor 60. Those of ordinary skill in the art will recognize that the sensor 60 itself may output a measured distance value, or may output data that may be used to calculate the distance.

Accordingly, the process includes a step of sensing at least one position of the closed end 30 of the parison P in the blow mold 54, before the closed end 30 of the parison P contacts the transversely extending surface T in the mold 54. The transversely extending surface T may be, for example, the upper surface of the bottom plate 58 that intersects and is transversely oriented with respect to the longitudinal axis A.

The sensing step may include sensing the lower internal surface 38 of the closed end 30 of the parison P within the mold 54, by using the sensor 60 operative substantially parallel to the central longitudinal axis A of parison P from above the parison P. With reference to FIG. 4A, the sensor 60 (FIG. 5) may be positioned such that a target of the parison P being sensed is within a circle 37 smaller than the inner diameter 25 of the neck finish 24 of the parison P. The sensor 60 (FIG. 5) may be positioned such that the target being sensed is in the center or interior end surface 36 of the circle 37, but some out-of-alignment can be tolerated with the understanding that slight inaccuracies may result.

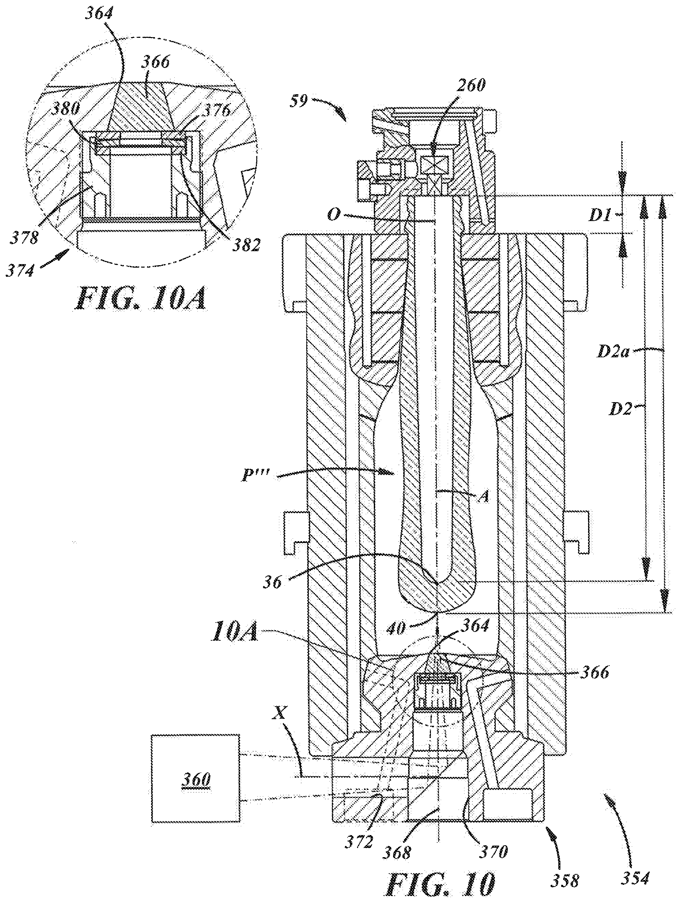

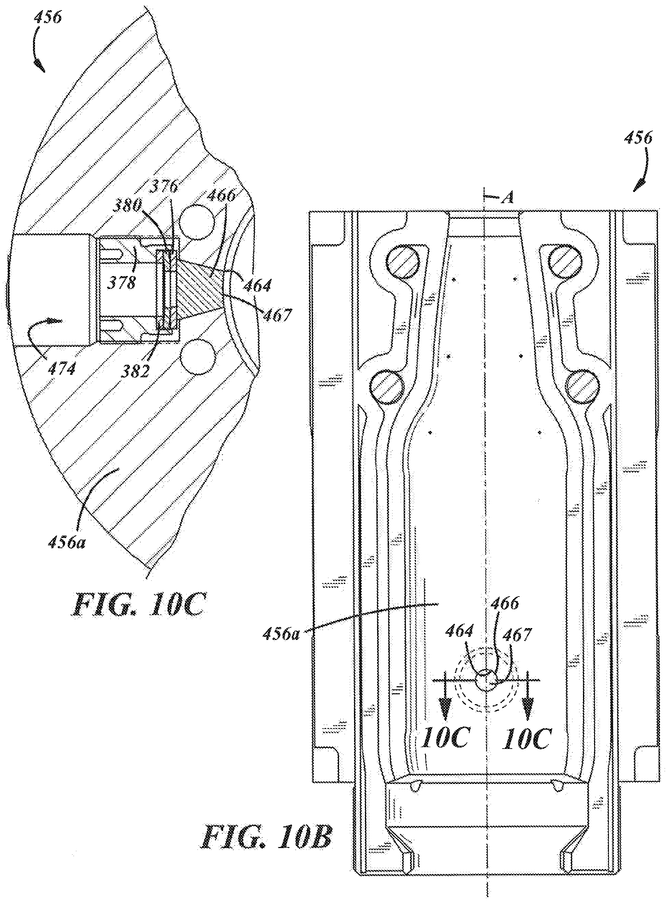

Referring again to FIG 5, a length of the parison P may be determined by a length of an interior of the parison P. Once the sensor 60 has measured a distance D2 to the parison interior end surface 36, a resulting parison length may be determined by assuming the thickness D3 of a parison closed end 30 and a fixed distance D1. In other embodiments, the fixed distance D1 may be measured from the parison lip surface 44 and/or its corresponding surface in the neck ring 18 The resulting parison length is therefore equal to (D2 - D1) + D3. Alternatively, the sensing step may include sensing a lower exterior end surface 40 of the closed end 30 of the parison P within the mold 54, as will be described with respect to FIG. 10 herein below. Lastly, the amount of parison elongation can be ascertained by comparing the measured parison length to the theoretical length at the time the parison P was formed or by further analyzing the sensed distance after molding pressure is created in the mold.

The sensing step may be carried out from a specific time at which the parison P becomes seated within the mold 54 but before the mold halves 56a, 56b have closed and/or at the specific time the mold halves 56a, 56b close together. Also, the sensing step may carried out until a time at which the molding step is initiated and/or a time at which a blow head (not shown) engages the mold 54. The sensing step may be carried out numerous times to determine the parison elongation rate, which is affected by glass temperature, and/or to identify an optimum parison length prior to initiating the molding step and/or to adjust the timing of initiation of the molding step.

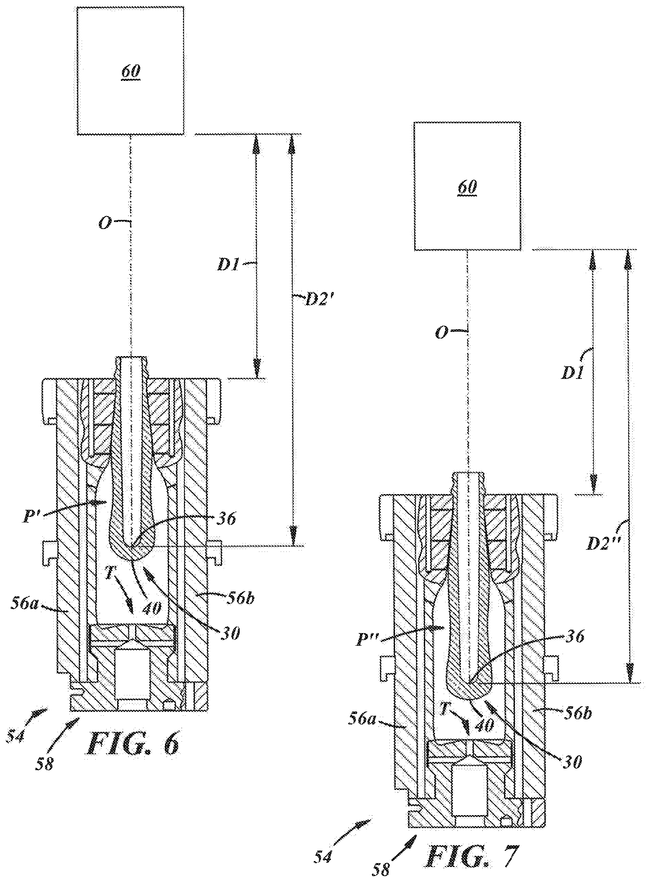

With reference to FIGS. 6 and 7, the mold halves 56a, 56b have closed around the parison. As shown in FIG. 6, the parison has begun to elongate and is shown as parison P'. Distance D1 is identical to that shown in FIG. 5, but the sensed distance has increased, and is shown as distance D2', due to the increased parison length. Similarly, as shown in FIG. 7, the parison has fully elongated and is shown as parison P". Distance D1 is identical to that shown in FIG. 5, but the sensed distance has increased further, and is shown as distance D2", due to the further increased parison length. Accordingly, the process includes allowing the parison P to elongate in the mold 54 along the central longitudinal axis A. It is recognized that this discussion pertains to sensing the lower interior end surface 36 (for instance, at a central portion thereof), however, the length can also be measured by sensing the lower exterior end surface 40 as discussed below with respect to FIG. 10.

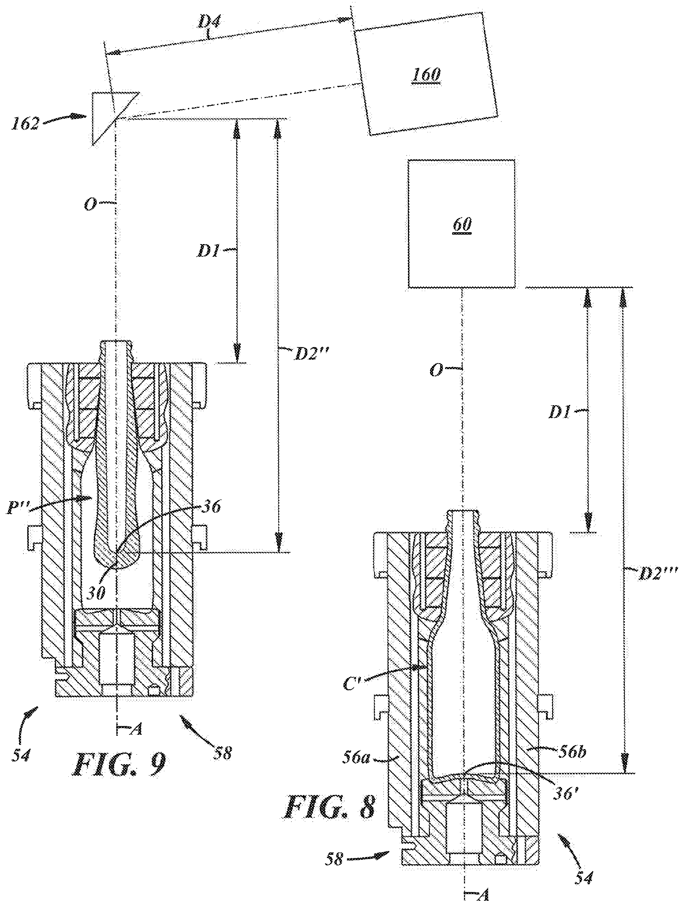

With reference to FIG. 8 (and FIG. 7), a container C' may be formed by molding the parison (P") against internal surfaces of the mold 54 responsive to the sensing step. More particularly, molding may include applying at least one of positive or negative pressure to the parison (P") responsive to sensing of the parison (P"). For example, blow gas or air may be applied through a blow head (not shown) to the interior of the parison (P") and/or vacuum may be applied to the exterior of the parison (P") to form the container C'.

More specifically, initiation of blow molding of the parison (P") may be responsive to sensing of the parison (P"), and may be carried out before the closed end 30 of the parison (P") contacts the transversely extending surface T in the mold 54. Also, the initiation of the molding step may responsive to the sensing step at a predetermined distance between the closed end 30 of the parison (P") and a fixed reference of the mold 54. For example, initiation of the molding step may be responsive to a certain position of the parison (P") in the mold 54. More specifically, initiation of the molding step may be responsive to the sensing step, wherein molding is initiated at a predetermined distance between an external surface of the closed end 30 of the parison (P") and a corresponding surface of the bottom plate 58 of the mold 54. Sensing may continue until the container C' is formed against the mold 54 and a lower interior end surface 36' is established.

The method may include adjusting at least one process parameter at any suitable time. For instance, the method may include sensing elongation of a presently sensed parison, and then adjusting a blank molding parameter of a subsequent blank molding cycle of a subsequently formed parison. In another instance, the method may include sensing elongation of a presently sensed parison in a present blow molding cycle and adjusting a blow molding parameter during the present blow molding cycle and/or adjusting the parameter between blow molding cycles. In other words, the method may include real-time process monitoring and control, and/or may include subsequent process cycle control in response to present or previous process monitoring.

As to the latter, the method may include sensing elongation of multiple parisons over multiple blow molding cycles, performing statistical analysis of the sensed elongation values, and adjusting parameters of subsequent blank molding cycles, reheat operations, and/or blow molding cycles. Similarly, the method may include adjusting parameters for all mold cavities of an entire section of an individual section machine if elongation values are the same across those cavities. Conversely, the method may include adjusting parameters for less than all mold cavities of an entire section of an individual section machine if elongation values are the different across those cavities. Likewise, the method may include adjusting different parameters for different mold cavities of an entire section of an individual section machine if elongation values are the different across those cavities.

In a specific example, the adjusting step may include adjusting timing of the molding step. For instance, the molding parameter(s) may include a time at which molding pressure is initiated so that formation of the container C' can be initiated at a repeatable and known distance above a reference point, for example, an upper surface of the bottom plate 58. In another example, the adjustment step may include adjusting glass gob temperature to affect parison elongation time and distance. For instance, a gob feeder heater can be adjusted to apply more or less heat to molten glass to make a glass gob more or less viscous. In another example, the molding parameter(s) may include an initial molding pressure amount, a molding pressure profile or pressure ramp-up/ramp-down schedule, or any other suitable parameter(s). Accordingly, the container C' can be formed for uniform or otherwise optimal wall thickness or any other suitable qualities dependent on parison elongation.

The presently disclosed method also may include estimating a trigger position of the closed end 30 of the parison (P") that is used to initiate the molding step, responsive to the sensing step. For example, the sensing step may include sensing at least two positions of the closed end 30 of the parison (P") and the estimating step may include extrapolating the at least two positions to obtain the trigger position. In another example, data could be estimated as a result of one measurement along with an assumption of parison length at the instant that parison transfer to the mold 54 was complete. Such steps may be useful during times when the path between the sensor and the parison is blocked.

In another embodiment, the estimating step may include interpolating the at least two positions, for example, during times when measurement is not possible but at least one measurement before and one measurement after have been captured. For example, the sensor may be obstructed at a time during which it is desired to know parison elongation in order to accurately adjust the molding or parison formation step. In an example where two sensors are used, one from above and one from below, if the working distance of the lower sensor is only 10 mm and it is desired to know when the bottom of the parison has elongated to a point 15 mm away from the blow mold bottom plate, then a reading from the upper sensor is used at an earlier time (prior to the blow head blocking the view) to interpolate the time at which the bottom end of the parison was 15 mm above the blow mold bottom plate. This example requires that a final blow be delayed at least until the bottom end of the parison reaches a point 10 mm above the blow mold bottom plate so that the interpolation only needs to account for parison elongation under gravity. Interpolation may be based on a linear model, a more complicated FEA model, or on measurements of elongating parisons obtained via empirical studies.

FIGS. 9 through 10A show other illustrative embodiments of blow molding equipment. These embodiments are similar in many respects to the embodiment of FIGS. 1-8 and like numerals among the embodiments generally designate like or corresponding elements throughout the several views of the drawing figures. Accordingly, the descriptions of the embodiments are incorporated into one another, and description of subject matter common to the embodiments generally may not be repeated here.

FIG. 9 illustrates a sensor 160 located off-axis or along a separate axis from the longitudinal axis A of a parison P". A signal transceiver 162 is shown in a position operable to transmit and receive a signal from the sensor 160 to the parison P and vice-versa. The transceiver 162 may include a reflector, a fiber optic, or any other suitable device. The medium between the transceiver and the sensor can be anything that allows the passage of the signal, for example, fiber optics, a stand-alone set of signal reflection devices, air, or any other suitable medium. In this method, the interior of the parison P has a length equal to (D2"+D4) - (D1+D4) where (D2"+D4) is the value measured by the sensor 160 and (D1+D4) is a constant.

FIG. 10 illustrates several possible embodiments that may be used alone or in conjunction with one another. First, a sensor 260 may be carried by a blow head 59, which may be located at an upper portion of a mold 354 such that a sensor operational axis O is disposed along the longitudinal axis A. Second, a second sensor 360 may be disposed at a lower end of the mold 354 and may be used alone. Third, the second sensor 360 may be used in addition to the blow head sensor 260. Fourth, the second sensor 360 may be used in addition to the sensor 60 of FIG. 5. For instance, the sensor 60 may be used before a blow head descends onto the mold 354 and the second sensor 360 may be used after the blow head 59 is seated on the mold 354.

In one embodiment, the sensing step may include sensing the lower interior and exterior end surfaces 36, 40 of the closed end 30 of the parison P, and determining the respective distances D2, D2(a). More specifically, the first sensor 260 may be used to sense the parison lower interior end surface 36 so as to enable measurement of measure distance D2, and the second sensor 360 is used to sense the parison exterior end surface 40 so as to enable measurement of a distance D2(a). The resulting parison length is therefore equal to (D2(a) - D1), and the thickness D3 (FIG. 4) of the parison closed end 30 is therefore equal to (D2(a) - D2). Of course, the dimensional relationship between the sensors 260, 360 may be fixed, or at least known. Likewise, dimensional relationships between each sensor 260, 360 and the top of the mold 354, the inside bottom of the mold 354, or any other mold datums or reference points, may be fixed, or at least known, so as to facilitate calculation of the distances D2, D2(a).

In any case, the second sensor 360 may operate through a modified bottom plate 358. For example, as also shown in FIG. 10, the bottom plate 358 may include an opening 364 through its upper surface and an optical window 366 in the opening 364. The optical window 366 may include a single crystal sapphire, or any other suitable material, carried in the opening 364. In any case, the material of the window 366 should be compatible with the glass container manufacturing process. For instance, the window 366 should be transparent to the part of the electromagnetic spectrum to which the sensor(s) are designed to produce a signal, should not disturb the glass forming process by changing the heat flow significantly, should be compatible with other mold equipment materials, and/or should be able to withstand thermal shock, chemical attack, and abrasion by hot glass.

The optical window 366 may be carried by any wall of the mold 354 including body walls (for instance, side walls) and/or the bottom plate 358, which effectively may establish a bottom wall of the mold and, more specifically, may be part of a molding surface of the mold 354 that forms the container. The second sensor 360 may be operatively coupled to the optical window 366 and through the window 366 to sense the parison P"'. For example, the sensor 360 may be located off-axis or along a separate axis X (e.g., perpendicular or otherwise transverse) from the longitudinal axis A, and a signal transceiver 368 may be disposed in a position operable to transmit and receive a signal from the sensor 360 to the parison P"' and vice-versa. The transceiver 368 may be carried in a passage 370 in the bottom plate 358, and the second sensor 360 may be carried by the bottom plate 358 and/or located adjacent to the bottom plate 358. In any case, the second sensor 360 may communicate through a side opening 372 in the bottom plate 358. The second sensor 360 may include a laser triangulation sensor. It is believed that a 1 mW laser will work with a brightly glowing glass parison at 1050 degrees Celsius. Accordingly, the sensing step of the method also or instead may include sensing the lower external end surface 40 of the closed end 30 of the parison P'" within the mold 354, by using the sensor 360 operative substantially parallel to the central longitudinal axis A and from below the parison P"'. In other words, the sensor 360 may be operative along a sensing path below the parison P'" and extending through the bottom plate 358. Of course, the sensor itself need not be oriented parallel to the axis A and reflectors/mirrors may be used to redirect a sensing path.

The optical window 366 may be part of an assembly 374 that also includes the bottom plate 358, a first flat washer 376 behind the window 366, a tube nut 378 carried in a corresponding pocket of the bottom plate 358, and a Belleville washer 380 and a second flat washer 382 disposed between the tube nut 378 and the first flat washer 376. The first flat washer 376 may be composed of 4140 steel, which may be Dyna-Blue heat treated to 28-32 Rc and polished. The tube nut 378 may be composed of Ampco 18 material and may have external threads coated with copper anti-seize lubricant. The first Belleville washer 380 may be composed of 4140 steel, which may be Dyna-Blue heat treated to 28-32 Rc. The second Bellville washer 382 may be composed of Inconel, which may be heat-treated, and polished.

The optical window 366 may be of generally frustoconical shape and having a taper angle that must be greater than 3 degrees to prevent the window 366 and the bottom plate 358 from self-locking and enabling thermal stresses to build and destroy one or the other or both components. Preferably, the taper angle should be larger than 7 degrees and, as shown in the illustrated example is about 30 degrees, for instance, 25-35 degrees including all ranges and subranges therebetween. Additionally, at operating temperature of the mold, an upper surface of the window 366 should not protrude past a surrounding upper surface of the bottom plate 358. This is accomplished by considering the taper angle between the components and the relative coefficients of thermal expansion of the different materials of the components to recess the upper surface of the window 366 somewhat with respect to this upper surface of the bottom plate 358. As the diameter of the bottom plate opening 364 expands, as should be the case in using a dielectric window in a metal mold, the window material will advance into the tapered opening 364. Also it is desirable to match the thermal conductivity of the materials as closely as possible or to limit the size of the window 366 to introduce as small a disturbance as possible to heat flow during the container forming process.

The upper surface of the window 366 and the surrounding upper surface of the bottom plate 358 should be flush at 500 degrees Celsius. But that relationship will change with temperature, because the material of the window 366 may expand more or less than the bronze material of the bottom plate 358. Accordingly, the design of the assembly 374 should be such that the window 366 is permitted to expand and contract freely as temperature increases and decreases. In a cold, or room temperature, condition, the upper surface of the window 366 may be recessed with respect to the surrounding upper surface of the bottom plate 358, for example, about 0.065 mm, for instance, 0.060 to 0.070 mm. When the molding operating temperature is reached, the difference in coefficients of expansion of the materials will result in the upper surfaces of the window 366 and the bottom plate 358 being flush within a safe tolerance to produce a container without dimpling thereof.

In another embodiment illustrated in FIGS. 10B and 10C, a sensor (not shown) may operate through a modified mold body 456, for instance a mold half 456a. This embodiment is similar in many respects to the embodiment of FIGS. 1-10A and like numerals among the embodiments generally designate like or corresponding elements throughout the several views of the drawing figures. Accordingly, the descriptions of the embodiments are incorporated into one another, and description of subject matter common to the embodiments generally may not be repeated here.

The mold half 456a may include an opening 464 in a side surface thereof and an optical window 466 in the opening 464. The optical window 466 may be carried by a side wall of the mold half 456a and, more specifically, may be part of a molding surface of the mold half 456a that forms the container. Accordingly, a radially inner surface 467 of the window 466 may be machined and/or polished to be incurvate to follow an excurvate cylindrical surface of a container to be formed. Of course, the radially inner surface 467 of the window 466 may be shaped in accordance with any desired shape of a container.

A sensor (not shown) may be operatively coupled to the optical window 466 and through the window 466 to a parison (not shown). Accordingly, the sensing step of the method also or instead may include sensing a lower external surface of a closed end of a parison (not shown) within a mold, by using a sensor operative substantially perpendicular to a central longitudinal axis A and from alongside the parison. In other words, the sensor may be operative along a sensing path to the side of the parison and extending through the mold body. Of course, the sensor itself need not be oriented perpendicular to the axis and reflectors/mirrors may be used to redirect a sensing path.

The optical window 466 may be part of an assembly 474 that also includes the mold half 456a, the first flat washer 376 behind the window 466, the tube nut 378 carried in a corresponding pocket of the mold half 456a, and the Belleville washer 380 and the second flat washer 382 disposed between the tube nut 378 and the first flat washer 376. Although only one window 466 is illustrated in the drawing figures, a plurality of windows and corresponding components/features may be provided in the mold body. For instance, multiple windows may be axially spaced linearly along the axis A or helically around the axis. Accordingly, one or more sensors may sense elongation of a parison via multiple windows.

Those of ordinary skill in the art will recognize that the sensors 60, 160, 260, 360 may include built in processors and memory to carry out measurement calculations and interface with other glass forming machine controllers (not shown) that may be used to control various machine components and process parameters and that include their own processor(s). For example, other machine components may be controlled or adjusted, responsive to sensor input. More specifically, gob feeder parameters, gob distributor parameters, and/or mold equipment parameters may be controlled or adjusted in response to sensed parison positions, elongation, and/or the like.

For the various sensors and/or controllers, their processors may be coupled to suitable memory, one or more interfaces may be coupled to the processors, one or more input devices may be coupled to the processors, and/or one or more output devices may coupled to the processors. The input devices may be used to communicate any suitable commands, instructions, data, information, signals, and the like into the processors. The processors may process data and execute instructions that provide at least some of the functionality for the system. The processors may include, for example, one or more microprocessors, microcontrollers, discrete logic circuits having logic gates for implementing logic functions on data signals, application specific integrated circuits with suitable logic gates, programmable or complex programmable logic devices, programmable or field programmable gate arrays, and/or any other suitable type of electronic processing device(s). The memory may include any computer readable medium or media configured to provide at least temporary storage of at least some data, data structures, an operating system, application programs, program modules or data, and/or other computer software or computer-readable instructions that provide at least some of the functionality of the system and that may be executed by the processor. The memory may be in the form of removable and/or non-removable, volatile memory and/or nonvolatile memory Illustrative volatile memory may include, for example, random access memory (RAM), static RAM (SRAM), dynamic RAM (DRAM) including synchronous or asynchronous DRAM, and/or the like, for running software and data on the processors.

There thus has been disclosed a method of forming a glass container from a parison that fully satisfies one or more of the objects and aims previously set forth. The disclosure has been presented in conjunction with several illustrative embodiments, and additional modifications and variations have been discussed. Other modifications and variations readily will suggest themselves to persons of ordinary skill in the art in view of the foregoing discussion.

## Claims

1. A method of forming a glass container (C'), comprising the steps of:
allowing a suspended parison (P, P', p", P'") to elongate in a mold (14, 54, 354) along a central longitudinal axis (A);
sensing at least one position of a closed end (30) of the parison within the mold before the closed end of the parison contacts a transversely extending surface (T) in the mold; and
adjusting at least one process parameter responsive to the sensing step.

2. The method of claim 1, further comprising the step of molding the parison against internal surfaces of the mold responsive to the sensing step, and wherein the adjusting step includes adjusting a process parameter of the molding step.

3. The method of claim 2, wherein initiation of the molding step is responsive to the sensing step, and is carried out before the closed end of the parison contacts the transversely extending surface in the mold.

4. The method of claim 2, wherein initiation of the molding step is responsive to the sensing step at a predetermined distance between an external surface of the closed end of the parison and a corresponding surface of a bottom plate (58, 358) of the mold.

5. The method of claim 1, wherein the sensing step includes sensing a lower internal surface (36) of the closed end of the parison during elongation of the parison within the mold, by using a sensor (60, 160, 260, 360) operative either parallel within less than five angular degrees to the central longitudinal axis of the parison and from above the parison or perpendicular within less than five angular degrees to the central longitudinal axis of the parison and from a side (372) of the parison through a mold body (16, 56,456) of the mold.

6. The method of claim 1, further comprising the steps of:
forming the parison in a blank mold; and then
reheating the parison;
inverting the parison; and
transferring the parison to the mold;
wherein the sensing step is carried out from a time at which the parison is first seated within the mold and until at least one of a time at which the molding step is initiated or a time at which a blow head engages the mold; and
wherein the adjusting step includes adjusting a process parameter of the forming step or the reheating step.

7. The method of claim 1, further comprising a step of estimating a trigger position of the closed end of the parison that is used to initiate the molding step, responsive to the sensing step.

8. The method of claim 7, wherein the sensing step includes sensing at least two positions of the closed end of the parison and the estimating step includes extrapolating the at least two positions to obtain the trigger position.

9. The method of claim 2, wherein the molding step includes adjusting at least one parison molding parameter at least one of during a molding cycle or between molding cycles.

10. The method of claim 1, wherein the sensing step includes sensing a lower external surface (40) of the closed end of the parison within the mold, by using a sensor (360) operative parallel within less than five angular degrees to the central longitudinal axis of the parison and from below the parison through a bottom plate (58, 358) of the mold.

11. A glass container forming system, comprising:
a mold (14, 54, 354) to form a container (C') from a parison (P, P', P", P"') having an open end (26), a closed end (30), and a central longitudinal axis (A) extending therebetween, wherein the mold includes:
a bottom plate (58, 358), and
a mold body (16, 56, 456) having a lower end closeable around a portion of the bottom plate; and
a sensor (60, 160, 260, 360) operative parallel within less than five angular degrees to the longitudinal axis to sense at least one position of the closed end of the parison as the parison is suspended within the mold before the closed end of the parison contacts a transversely extending surface (T) in the mold or operative perpendicular within less than five angular degrees to the central longitudinal axis of the parison and from a side (372) of the parison through a mold body (16, 56, 456) of the mold for sensing a lower external surface of a closed end of the parison within the mold.

12. The system of claim 11 wherein the sensor is operative along a sensing path above the parison or below the mold.

13. The system of claim 12 wherein the sensor operates through the bottom plate, and the bottom plate includes an opening (364, 464) and an optical window (366, 466) in the opening, wherein the sensor is operatively coupled to the optical window and through the window to the parison.

14. The system of claim 11 wherein the sensor is operative along a sensing path at a side (372) of the parison, and the sensing path extends through the mold body, the mold body includes an opening (464) and an optical window (466) in the opening, wherein the sensor is operatively coupled to the optical window and through the window to the parison.

15. The system of claim 11 wherein said sensor is a triangulation sensor.

## Patentansprüche

1. Verfahren zum Ausbilden eines Glasbehälters (C'), mit folgenden Schritten:
Ausdehnen lassen eines hängenden Külbels (P, P', P", P'") in einer Form (14, 54, 354) entlang einer zentralen Längsachse (A),
Messen mindestens einer Position eines geschlossenen Endes (30) des Külbels in der Form, bevor das geschlossene Ende des Külbels eine sich quer erstreckende Oberfläche (T) in der Form berührt, und
Einstellen mindestens eines Prozessparameters in Reaktion auf den Messschritt.

2. Verfahren nach Anspruch 1, ferner umfassend den Schritt des Formens des Külbels gegen innenseitige Oberflächen der Form in Reaktion auf den Messschritt, und wobei der Einstellschritt das Einstellen eines Prozessparameters des Formungsschritts umfasst.

3. Verfahren nach Anspruch 2, wobei das Einleiten des Formungsschritts in Reaktion auf den Messschritt erfolgt und ausgeführt wird, bevor das geschlossene Ende des Külbels die sich quer erstreckende Oberfläche in der Form berührt.

4. Verfahren nach Anspruch 2, wobei das Einleiten des Formungsschritts in Reaktion auf den Messschritt bei einem vorbestimmten Abstand zwischen einer Außenseite des geschlossenen Endes des Külbels und einer entsprechenden Oberfläche einer Bodenplatte (58, 358) der Form erfolgt.

5. Verfahren nach Anspruch 1, wobei der Messschritt das Messen einer unteren innenseitigen Oberfläche (36) des geschlossenen Endes des Külbels während der Ausdehnung des Külbels in der Form mittels eines Sensors (60, 160, 260, 360) umfasst, der entweder mit weniger als fünf Winkelgrad Abweichung parallel zur zentralen Längsachse des Külbels und von oberhalb des Külbels arbeitet, oder mit weniger als fünf Winkelgrad Abweichung senkrecht zu der zentralen Längsachse des Külbels und von einer Seite (372) des Külbels durch einen Formkörper (16, 56, 456) der Form hindurch.

6. Verfahren nach Anspruch 1, ferner mit folgenden Schritten:
Ausbilden des Külbels in einer Rohlingsform und danach
erneutes Aufheizen des Külbels,
Wenden des Külbels und
Verbringen des Külbels in die Form,
wobei der Messschritt ab einem Zeitpunkt erfolgt, zu dem der Külbel erstmals in der Form sitzt, und bis mindestens zu einem Zeitpunkt, zu dem der Formungsschritt eingeleitet wird, oder bis zu einem Zeitpunkt, zu dem ein Blaskopf in die Form eingreift, und
wobei der Einstellschritt das Einstellen eines Prozessparameters des Formungsschritts oder des Schritts des erneuten Aufheizens umfasst.

7. Verfahren nach Anspruch 1, ferner umfassend einen Schritt des Abschätzens einer Auslöseposition des geschlossenen Endes des Külbels, die verwendet wird, um den Formungsschritt in Reaktion auf den Messschritt einzuleiten.

8. Verfahren nach Anspruch 7, wobei der Messschritt das Messen von mindestens zwei Positionen des geschlossenen Endes des Külbels umfasst und der Abschätzschritt das Extrapolieren der mindestens zwei Positionen zum Erhalten der Auslöseposition umfasst.

9. Verfahren nach Anspruch 2, wobei der Formungsschritt das Einstellen mindestens eines Formungsparameters für den Külbel während eines Formungszyklus und/oder zwischen Formungszyklen umfasst.

10. Verfahren nach Anspruch 1, wobei der Messschritt das Messen einer unteren Außenseite (40) des geschlossenen Endes des Külbels innerhalb der Form mittels eines Sensors (360) umfasst, der mit weniger als fünf Winkelgrad Abweichung parallel zur zentralen Längsachse des Külbels und von unterhalb des Külbels durch eine Bodenplatte (58, 358) der Form hindurch arbeitet.

11. Glasbehälterformungssystem, umfassend:
eine Form (14, 54, 354) zum Ausbilden eines Behälters (C') aus einem Külbel (P, P', P", P'"), der ein offenes Ende (26), ein geschlossenes Ende (30) und eine zwischen diesen verlaufende zentrale Längsachse (A) aufweist, wobei die Form umfasst:
eine Bodenplatte (58, 358) und
einen Formkörper (16, 56, 456) mit einem unteren Ende, das um einen Abschnitt der Bodenplatte herum schließbar ist, und
einen Sensor (60, 160, 260, 360), der mit weniger als fünf Winkelgrad Abweichung parallel zu der Längsachse arbeitet, um mindestens eine Position des geschlossenen Endes des Külbels zu messen, während der Külbel in der Form hängt und bevor das geschlossene Ende des Külbels eine sich quer erstreckende Oberfläche (T) in der Form berührt oder der mit weniger als fünf Winkelgrad Abweichung senkrecht zu der zentralen Längsachse des Külbels und von einer Seite (372) des Külbels durch einen Formkörper (16, 56, 456) der Form hindurch arbeitet, um eine untere Außenseite des geschlossenen Endes des Külbels innerhalb der Form zu messen.

12. System nach Anspruch 11, wobei der Sensor entlang eines Messweges oberhalb des Külbels oder unterhalb der Form arbeitet.

13. System nach Anspruch 12, wobei der Sensor durch die Bodenplatte hindurch arbeitet und die Bodenplatte eine Öffnung (364, 464) und ein optisches Fenster (366, 466) in der Öffnung aufweist, wobei der Sensor mit dem optischen Fenster und durch das Fenster hindurch mit dem Külbel in Wirkverbindung steht.

14. System nach Anspruch 11, wobei der Sensor entlang eines Messweges auf einer Seite (372) des Külbels arbeitet und der Messweg durch den Formkörper hindurch verläuft, wobei der Formkörper eine Öffnung (464) und ein optisches Fenster (466) in der Öffnung aufweist, wobei der Sensor mit dem optischen Fenster und durch das Fenster hindurch mit dem Külbel in Wirkverbindung steht.

15. System nach Anspruch 11, wobei der Sensor ein Triangulationssensor ist.

## Revendications

1. Procédé de formation d'un récipient en verre (C'), comprenant les étapes consistant à :
permettre à une paraison suspendue (P, P', P", P'") de s'allonger dans un moule (14, 54, 354) le long d'un axe longitudinal central (A) ;
détecter au moins une position d'une extrémité fermée (30) de la paraison à l'intérieur du moule avant que l'extrémité fermée de la paraison n'entre en contact avec une surface s'étendant transversalement (T) dans le moule ; et
ajuster au moins un paramètre de procédé en réponse à l'étape de détection.

2. Procédé selon la revendication 1, comprenant en outre l'étape de moulage de la paraison contre des surfaces internes du moule en réponse à l'étape de détection, et dans lequel l'étape d'ajustement inclut l'ajustement d'un paramètre de procédé de l'étape de moulage.

3. Procédé selon la revendication 2, dans lequel l'initiation de l'étape de moulage est en réponse à l'étape de détection, et est effectuée avant que l'extrémité fermée de la paraison n'entre en contact avec la surface s'étendant transversalement dans le moule.

4. Procédé selon la revendication 2, dans lequel l'initiation de l'étape de moulage est en réponse à l'étape de détection à une distance prédéterminée entre une surface externe de l'extrémité fermée de la paraison et une surface correspondante d'une plaque inférieure (58, 358) du moule.

5. Procédé selon la revendication 1, dans lequel l'étape de détection inclut la détection d'une surface interne inférieure (36) de l'extrémité fermée de la paraison pendant l'allongement de la paraison à l'intérieur du moule, en utilisant un capteur (60, 160, 260, 360) fonctionnant soit parallèlement à moins de cinq degrés angulaires à l'axe longitudinal central de la paraison et à partir du dessus de la paraison, soit perpendiculairement à moins de cinq degrés angulaires à l'axe longitudinal central de la paraison et à partir d'un côté (372) de la paraison à travers un corps de moule (16, 56, 456) du moule.

6. Procédé selon la revendication 1, comprenant en outre les étapes consistant à :
former la paraison dans un moule ébaucheur ; et ensuite
réchauffer la paraison ;
retourner la paraison ; et
transférer la paraison dans le moule ;
dans lequel l'étape de détection est effectuée à partir d'un moment où la paraison est d'abord positionnée à l'intérieur du moule et jusqu'à au moins un parmi un moment où l'étape de moulage est initiée ou un moment où une tête de soufflage entre en contact avec le moule ; et
dans lequel l'étape d'ajustement inclut l'ajustement d'un paramètre de procédé de l'étape de formation ou de l'étape de réchauffage.

7. Procédé selon la revendication 1, comprenant en outre une étape d'estimation d'une position de déclenchement de l'extrémité fermée de la paraison qui est utilisée pour initier l'étape de moulage, en réponse à l'étape de détection.

8. Procédé selon la revendication 7, dans lequel l'étape de détection inclut la détection d'au moins deux positions de l'extrémité fermée de la paraison et l'étape d'estimation inclut l'extrapolation des au moins deux positions pour obtenir la position de déclenchement.

9. Procédé selon la revendication 2, dans lequel l'étape de moulage inclut l'ajustement d'au moins un paramètre de moulage de paraison pendant un cycle de moulage et/ou entre des cycles de moulage.

10. Procédé selon la revendication 1, dans lequel l'étape de détection inclut la détection d'une surface externe inférieure (40) de l'extrémité fermée de la paraison à l'intérieur du moule, en utilisant un capteur (360) fonctionnant parallèlement à moins de cinq degrés angulaires à l'axe longitudinal central de la paraison et à partir du dessous de la paraison à travers une plaque inférieure (58, 358) du moule.

11. Système de formation de récipient en verre, comprenant :
un moule (14, 54, 354) pour former un récipient (C') à partir d'une paraison (P, P', P", P'") ayant une extrémité ouverte (26), une extrémité fermée (30), et un axe longitudinal central (A) s'étendant entre elles, dans lequel le moule inclut :
une plaque inférieure (58, 358), et
un corps de moule (16, 56, 456) ayant une extrémité inférieure pouvant être fermée autour d'une partie de la plaque inférieure ; et
un capteur (60, 160, 260, 360) fonctionnant soit parallèlement à moins de cinq degrés angulaires à l'axe longitudinal pour détecter au moins une position de l'extrémité fermée de la paraison lorsque la paraison est suspendue à l'intérieur du moule avant que l'extrémité fermée de la paraison n'entre en contact avec une surface s'étendant transversalement (T) dans le moule, soit perpendiculairement à moins de cinq degrés angulaires à l'axe longitudinal central de la paraison et à partir d'un côté (372) de la paraison à travers un corps de moule (16, 56, 456) du moule pour la détection d'une surface externe inférieure de l'extrémité fermée de la paraison à l'intérieur du moule.

12. Système selon la revendication 11, dans lequel le capteur fonctionne le long d'un trajet de détection au-dessus de la paraison ou en dessous du moule.

13. Système selon la revendication 12, dans lequel le capteur fonctionne à travers la plaque inférieure, et la plaque inférieure inclut une ouverture (364, 464) et une fenêtre optique (366, 466) dans l'ouverture, dans lequel le capteur est couplé de manière fonctionnelle à la fenêtre optique et à travers la fenêtre à la paraison.

14. Système selon la revendication 11, dans lequel le capteur fonctionne le long d'un trajet de détection sur un côté (372) de la paraison, et le trajet de détection s'étend à travers le corps de moule, le corps de moule inclut une ouverture (464) et une fenêtre optique (466) dans l'ouverture, dans lequel le capteur est couplé de manière fonctionnelle à la fenêtre optique et à travers la fenêtre à la paraison.

15. Système selon la revendication 11, dans lequel ledit capteur est un capteur de triangulation.
